# EUROPÄISCHE PATENTANMELDUNG

(11) **EP 4 541 963 A1**
(43) Veröffentlichungstag der Anmeldung: **23.04.2025**
(21) Anmeldenummer: 24200344.0
(22) Anmeldetag: 13.09.2024
(51) Int. Cl.: D06F 39/02

(54) **WASCHMITTELVERTEILER FÜR EINE WASCHMASCHINE UND WASCHMASCHINE**

(30) Priorität: 20.10.2023 DE 102023128918
(71) Anmelder: E.G.O. Elektro-Gerätebau GmbH, 75038 Oberderdingen (DE)
(72) Erfinder: Vogt, Mirja, 72649 Wolfschlugen (DE); Schaumann, Uwe, 75038 Oberderdingen (DE); Witt, Florian, 21465 Wentorf (DE); Hecker, Matthias, 20357 Hamburg (DE)
(74) Vertreter: Patentanwälte Ruff, Wilhelm, Beier, Dauster & Partner mbB

(57) **Zusammenfassung**

Ein Waschmittelverteiler (30) für eine Waschmaschine, in dem Waschmittel und Zusatzstoffe mit Wasser zusammengebracht und in eine Trommel (15) der Waschmaschine weitergeleitet werden, weist eine Aufnahme mit mehreren Aufnahmekammern als herausziehbare Schublade auf. Eine erste Aufnahmekammer (21) weist nach unten einen Kammerauslass auf und ist nach oben offen, wobei die anderen Aufnahmekammern (22-24) nach unten geschlossen und nach oben offen sind. Eine flächige Verteilabdeckung (33) ist oberhalb der Aufnahme angeordnet und weist ein Innenvolumen auf mit voneinander getrennten Wasserkanälen darin. Mehrere Wasserkanäle sind zu einer lateralen Außenseite der Verteilabdeckung (33) geführt und bilden dort Kanalöffnungen (63-65), wobei mehrere Wasserkanäle in der Verteilabdeckung zusammengeführt sind. Ein Abfuhr-Wasserkanal (39a, 39b) weist eine Auslassöffnung (42a) oberhalb der ersten Aufnahmekammer (21) auf. An den Kanalöffnungen (63-65) an der lateralen Außenseite sind Dosierpumpen (67-69) angeordnet. Ein Zufuhr-Wasserkanal (55-57) führt von dieser Kanalöffnung (63-65) zu einer nach unten geschlossenen Aufnahmekammer (22-24), wobei der Abfuhr-Wasserkanal (39a, 39b) in der Verteilabdeckung (33) von einer Kanalöffnung (63-65) zu der Dosierpumpe (67-69) in die erste Aufnahmekammer (21) hinein führt.

## Beschreibung

### Anwendungsgebiet und Stand der Technik

Die Erfindung betrifft einen Waschmittelverteiler für eine Waschmaschine, mit dem Waschmittel und/oder Zusatzstoffe mit Wasser zusammengebracht bzw. vermischt werden. Dann sollen sie in eine Trommel der Waschmaschine weitergeleitet werden, in der sich zu waschende Wäsche befindet. Des Weiteren betrifft die Erfindung eine Waschmaschine mit einem solchen Waschmittelverteiler.

Bei üblichen Waschmaschinen werden in eine Art Schublade oder Schubladensystem in verschiedenen Aufnahmen Waschmittel und ggf. Weichspüler oder sonstige Zusatzstoffe eingebracht. Durch von oben einströmendes Wasser werden Waschmittel und Zusatzstoffe nach unten in eine trichterartige Auffangvorrichtung gespült. Von dort aus gelangen sie in das Innere der Trommel oder eines Trommelaufnahmebehälters, vermischt mit Wasser, um die Wäsche in der Trommel zu waschen.

Aus der DE 10 2014 115 957 A1 ist es bekannt, Waschmittel und sonstige Zusatzstoffe automatisch einzudosieren, abhängig von einem von einer Bedienperson gewählten Waschprogramm. Dabei können das Waschmittel und die Zusatzstoffe in Tanks oder Kartuschen odgl. vorhanden sein, die bei Bedarf ausgetauscht werden können, insbesondere wenn sie leer sind.

### Aufgabe und Lösung

Der Erfindung liegt die Aufgabe zugrunde, einen eingangs genannten Waschmittelverteiler sowie eine eingangs genannte Waschmaschine zu schaffen, mit denen Probleme des Standes der Technik gelöst werden können und es vorzugsweise möglich ist, einen solchen Waschmittelverteiler bzw. eine damit versehene Waschmaschine einfach und praxistauglich aufbauen zu können sowie eine vorteilhafte Nutzung zu erreichen, insbesondere was Verwendung bzw. Zudosierung von Waschmitteln oder Zusatzstoffen betrifft.

Gelöst wird diese Aufgabe durch einen Waschmittelverteiler mit den Merkmalen des Anspruchs 1 sowie durch eine Waschmaschine mit den Merkmalen des Anspruchs 14. Vorteilhafte sowie bevorzugte Ausgestaltungen der Erfindung sind Gegenstand der weiteren Ansprüche und werden im Folgenden näher erläutert. Dabei werden manche Merkmale nur für den Waschmittelverteiler oder nur für die damit versehene Waschmaschine beschrieben. Sie sollen jedoch unabhängig davon sowohl für einen Waschmittelverteiler als auch für eine Waschmaschine selbstständig und unabhängig voneinander gelten können. Der Wortlaut der Ansprüche wird durch ausdrückliche Bezugnahme zum Inhalt der Beschreibung gemacht.

Der Waschmittelverteiler mit der eingangs genannten Verwendung weist eine Aufnahme auf, die mehrere Aufnahmekammern hat, beispielsweise zwei bis fünf Aufnahmekammern. Diese Aufnahme kann vorteilhaft als aus der Waschmaschine herausziehbare Schublade ausgebildet sein, insbesondere an einer Vorderseite der Waschmaschine. So kann sie vorteilhaft an einer üblichen Stelle für eine bekannte Schublade zum Hinzugeben von Waschmittel angeordnet sein, beispielsweise oben links an der Vorderseite einer Waschmaschine. Mindestens eine erste Aufnahmekammer der Aufnahme weist einen Kammerauslass auf, der nach unten oder nach hinten von ihr abgeht. Vorteilhaft ist der Kammerauslass als einfache Öffnung an einem Boden, insbesondere einem trichterförmigen Boden, oder einem hinteren Bereich bzw. einer Rückwand der ersten Aufnahmekammer ausgebildet. Nach oben ist die Aufnahmekammer offen, insbesondere wie es aus dem derzeitigen Stand der Technik bekannt ist. So kann beispielsweise Waschmittel in flüssiger Form oder Pulverform von einer Bedienperson einfach von oben in diese erste Aufnahmekammer eingegeben werden.

Mindestens eine Aufnahmekammer, und zwar eine andere als die erste Aufnahmekammer, ist nach unten geschlossen. Nach oben kann sie entweder ganz offen sein oder nur eine Öffnung aufweisen, möglicherweise auch eine Öffnung in einen Rohrstutzen oder Schlauch. Vorteilhaft gibt es mehrere dieser Aufnahmekammern, besonders vorteilhaft sind sie zumindest teilweise oder alle gleichartig und/oder gleich groß ausgebildet. In diese Aufnahmekammern können Waschmittel und/oder Zusatzstoffe für eine automatische Zudosierung eingebracht werden, wie noch näher erläutert wird. Eine aus dem Stand der Technik bekannte Verwendung von Kartuschen dafür ist ebenfalls leicht möglich. Das kann zwar den konstruktiven Aufwand erhöhen, weist aber Vorteile in der praktischen Handhabung auf.

Des Weiteren weist der Waschmittelverteiler eine flächige Verteilabdeckung auf, die oberhalb der Aufnahme angeordnet ist. Sie kann mit einem Abstand zwischen 0,5 cm und 5 cm darüber angeordnet sein, vorteilhaft bis 2 cm, also mit relativ geringem Abstand. Die Verteilabdeckung ist im Wesentlichen flach ausgebildet und weist ein Innenvolumen oder ein Inneres auf mit voneinander getrennten Wasserkanälen darin bzw. sie weist in ihrem Inneren mehrere Wasserkanäle auf, die voneinander getrennt verlaufen können, aber zumindest teilweise miteinander verbunden sind. Mehrere solcher Wasserkanäle führen zu einer lateralen Außenseite der Verteilabdeckung. An ihrem Austritt daraus bilden sie Kanalöffnungen, die also zur Seite hin offen sein können bzw. zur Seite hin weisen können. Anstelle zur lateralen Außenseite können sie auch bis in einen lateralen Randbereich geführt sein. Des Weiteren sind mehrere Wasserkanäle in der Verteilabdeckung zusammengeführt, so dass sie einzeln ineinander münden können oder einer in den anderen übergehen kann. Es kann auch vorgesehen sein, dass sich mehr als zwei Wasserkanäle an einer Stelle treffen. Ebenso kann vorgesehen sein, dass mehrere Wasserkanäle, vorzugsweise in sehr kurzer Ausgestaltung, hintereinander in einen weiteren Wasserkanal münden, vorzugsweise mit Funktionseinheiten wie Ventilen oder Pumpen dazwischen. Mindestens ein Abfuhr-Wasserkanal ist vorgesehen, der eine Auslassöffnung oberhalb der mit dem vorgenannten Kammerauslass versehenen ersten Aufnahmekammer aufweist. Dieser Abfuhr-Wasserkanal dient dazu, Wasser von oben in diese erste Aufnahmekammer einzubringen oder einzuspülen, um dort vorhandenes Waschmittel auf bekannte Art und Weise durch den Kammerauslass auszuspülen zur Verwendung in der Trommel. Der Abfuhr-Wasserkanal kann an dieser Auslassöffnung enden, alternativ und vorteilhaft kann er auch weitergeführt sein.

An mindestens einer der Kanalöffnungen an der lateralen Außenseite oder im seitlichen Randbereich ist eine Dosierpumpe angeordnet, mit der Waschmittel und/oder Zusatzstoffe bezüglich ihrer Menge dosiert werden und dabei auch transportiert werden bzw. gepumpt werden. Ein Zufuhr-Wasserkanal ist in der Verteilabdeckung vorgesehen, der von dieser Kanalöffnung zu einer der vorbeschriebenen geschlossen ausgebildeten Aufnahmekammern neben der ersten Aufnahmekammer führt. Insbesondere weist der Zufuhr-Wasserkanal eine Öffnung oberhalb dieser Aufnahmekammer auf oder kann, beispielsweise mittels eines Rohrstutzens oder eines elastischen Schlauchs, mit der Aufnahmekammer oder einer darin befindlichen Kartusche oder eines Tanks mit Waschmittel und/oder Zusatzstoff darin geführt sein. Somit dient der Zufuhr-Wasserkanal letztlich dazu, dass die Dosierpumpe durch ihn hindurch Waschmittel oder Zusatzstoff aus der entsprechenden Aufnahmekammer über die Kanalöffnung ansaugt. Dann kann die Dosierpumpe das angesaugte Waschmittel oder den Zusatzstoff von der genannten Kanalöffnung in den Abfuhr-Wasserkanal pumpen, von wo aus er zu der Auslassöffnung gebracht wird und so in die erste Aufnahmekammer oder direkt in die Trommel bzw. in einen Trommelaufnahmebehälter hineingelangen kann. So ist der Zufuhr-Wasserkanal mit dem Abfuhr-Wasserkanal verbunden bzw. mündet in diesen, nämlich über die Dosierpumpe bzw. durch sie hindurch. Hier können eine Drossel oder ein ansteuerbares Ventil vorgesehen sein, um einen Durchfluss durch den Abfuhr-Wasserkanal steuern bzw. sperren und öffnen oder regulieren zu können. Dies wird später noch erläutert. Alternativ könnte der Abfuhr-Wasserkanal auch mit einer separaten Leitung das Waschmittel oder den Zusatzstoff zur bzw. in die Trommel bringen an die Wäsche heran.

Somit ermöglicht die Verteilabdeckung das Führen von Waschmittel oder Zusatzstoffen von Tanks oder Kartuschen hin zu der ersten Aufnahmekammer und von dort in den Trommelaufnahmebehälter oder direkt in die Trommel. Dies kann den Vorteil aufweisen, dass eine übliche herausziehbare Schublade oder allgemein eine Aufnahme bzw. zumindest eine unter der Aufnahme oder Schublade angeordnete Auffangvorrichtung im Wesentlichen ausgebildet sein können wie bislang. So muss eine Waschmaschine nur geringfügig geändert werden und nicht grundsätzlich neu konstruiert werden, damit die Erfindung darin verwirklicht werden kann. Durch die Anordnung der mindestens einen Dosierpumpe an der Verteilabdeckung selbst, welche fest in der Waschmaschine verbaut sein kann und sich oberhalb der Aufnahme befindet, ist es möglich, dass insbesondere ein elektrischer Anschluss an die Dosierpumpe leichter möglich ist, da diese nicht mit der herausziehbaren Aufnahme bewegbar sein muss. Dies vereinfacht den Aufbau und die Konstruktion und senkt mögliche Fehlerfälle. Dadurch, dass mehrere Wasserkanäle in der Verteilabdeckung angeordnet sind, kann diese als ein einziges Teil bzw. als einfach ausgebildete Baueinheit hergestellt werden, ohne dass mehrere separate Leitungen oder Schläuche für die Wasserkanäle montiert werden müssen. Die Verteilabdeckung selbst kann durch Kunststoffspritzguss hergestellt sein, beispielsweise einteilig oder zweiteilig, alternativ durch 3D-Druck. So ist eine Serienfertigung leicht möglich.

In weiterer Ausgestaltung der Erfindung kann mindestens ein erster Wassereinlass von außen an der Verteilabdeckung vorgesehen sein, beispielsweise als Öffnung oder Anschluss. Dieser Wassereinlass kann innerhalb der Verteilabdeckung mittels eines Wasserkanals mit der Auslassöffnung über der ersten Aufnahmekammer verbunden sein. So kann beispielsweise Frischwasser von außen in diese erste Aufnahmekammer direkt hineinlaufen als Zugang oder Zulauf in die Trommel oder in einen die Trommel umgebenden Trommelaufnahmebehälter bzw. Bottich. Es ist möglich, dass dieser Wasserkanal entweder mit keinem anderen Wasserkanal innerhalb der Verteilabdeckung verbunden ist. Alternativ kann er mit mindestens einem anderen Wasserkanal innerhalb der Verteilabdeckung verbunden sein, der zu der mindestens einen vorgenannten Dosierpumpe führt. So kann Frischwasser auch entweder an die Dosierpumpe selbst gelangen oder zumindest an dieser vorbeigeführt werden, insbesondere um dortige Rückstände von Waschmittel oder Zusatzstoffen wegzuspülen.

In Weiterbildung der Erfindung kann ein zweiter Wassereinlass an dem Waschmittelverteiler vorgesehen sein, der unter Umständen auch der einzige Wassereinlass sein kann. Er kann innerhalb der Verteilabdeckung zu einem Wasserkanal führen, der mit der mindestens einen Dosierpumpe verbunden ist, wie dies zuvor erläutert worden ist. Vorteilhaft ist dieser Wasserkanal mit allen Dosierpumpen an der Verteilabdeckung verbunden, wobei besonders vorteilhaft der Pumpenauslass jeder Dosierpumpe zu diesem Wasserkanal führt bzw. damit verbunden ist. So kann dieser Wasserkanal das von den Dosierpumpen bereitgestellte Waschmittel oder Zusatzstoffe mittels hindurchfließenden Wassers mitnehmen und in die Trommel bringen. Hier kann ggf. eine Umflutpumpe oder sonstige Pumpe vorgesehen sein, um das Wasser mit Waschmittel oder Zusatzstoffen im Waschmittelverteiler mehrfach umzuwälzen zur guten Durchmischung. Eine solche Pumpe kann vorteilhaft direkt an dem Waschmittelverteiler angeordnet sein.

In vorteilhafter Weiterbildung der vorgenannten Erfindung kann der zweite Wassereinlass mit einem Ventil verbunden sein oder an ein Ventil führen, das Wasser von dem zweiten Wassereinlass in der Verteilabdeckung weiterleitet. So kann dieses Ventil bestimmen, ob Wasser an dem zweiten Wassereinlass in die Verteilabdeckung hineinströmt oder nicht, insbesondere in den vorgenannten Wasserkanal und an der Dosierpumpe vorbei.

Ein vorgenanntes Ventil am zweiten Wassereinlass kann bevorzugt als Zwei-Wege-Ventil ausgebildet sein. Dabei ist es möglich, dass ein Ventileinlass mit dem zweiten Wassereinlass verbunden ist bzw. der zweite Wassereinlass zu dem Ventileinlass führt. Ein Ventilauslass ist mit dem Zufuhr-Wasserkanal verbunden, so dass beispielsweise Frischwasser durch die Dosierpumpe gepumpt werden kann zu deren Reinigung.

In möglicher Weiterbildung der Erfindung kann der Abfuhr-Wasserkanal in mehrfach gebogener Form von der mindestens einen Dosierpumpe, vorteilhaft von allen Dosierpumpen, zu der Auslassöffnung führen. Durch diese mehrfach gebogene Form verwirbelt entlangströmendes Wasser stärker und kann so mitgeführtes Waschmittel oder Zusatzstoffe besser auflösen und verteilen. Des Weiteren kann so eine größere Länge des Abfuhr-Wasserkanals bei vorgegebener Größe der Verteilabdeckung erreicht werden. Eine vorteilhafte Ausgestaltung für einen solchen Abfuhr-Wasserkanal ist eine Mäanderform, wobei der Abfuhr-Wasserkanal mehrere parallele und direkt benachbarte Kanalabschnitte aufweisen kann, die durch Biegungen von 180° miteinander verbunden sind. Eine alternative Ausgestaltung wäre eine runde oder angenähert eckige Spiralform mit der Auslassöffnung in der Mitte. Dann allerdings ist die oben genannte Option nicht mehr vorhanden, dass der Abfuhr-Wasserkanal nach der Auslassöffnung weitergeführt wird, zumindest nicht in derselben Ebene wie die sonstigen Kanalabschnitte. Dies würde die Konstruktion erheblich aufwändiger machen. Die Mäanderform bewirkt auch aufgrund der häufigen Richtungswechsel ein besseres Vermischen von Wasser und Zusatzstoffen.

In Weiterbildung der Erfindung kann vorgesehen sein, dass der Abfuhr-Wasserkanal unterschiedliche Kanalquerschnitte aufweist. So kann vorgesehen sein, dass er im Bereich der mehrfach gebogenen Form einen größeren Kanalquerschnitt aufweist als entlang eines Kanalabschnitts, der an der mindestens einen oder an mehreren bzw. allen Dosierpumpen sowie deren Pumpenauslässen vorbeiführt. So kann beispielsweise durch unterschiedliche Kanalquerschnitte eine Fließgeschwindigkeit des Wassers beeinflusst werden, möglicherweise auch dessen Verwirbelung. Bevorzugt ist der Kanalquerschnitt im Bereich der mehrfach gebogenen Form größer als im Kanalabschnitt entlang der mindestens einen Dosierpumpe. Der Kanalquerschnitt kann beispielsweise zweimal bis zwanzigmal größer sein, insbesondere fünfmal bis fünfzehnmal größer sein. Dadurch kann erreicht werden, dass das Wasser an der Dosierpumpe sehr schnell vorbeiströmt und somit Waschmittel oder Zusatzstoffe sehr gut abführt und einen Pumpenauslass möglicherweise auch etwas reinigt. Im Bereich der mehrfach gebogenen Form dagegen strömt das Wasser langsamer, aufgrund der vielfachen Biegungen aber mit guter Verwirbelung, um das Waschmittel und die Zusatzstoffe gut einzumischen bzw. aufzulösen.

In weiterer Ausgestaltung der Erfindung als oben genannte Option kann der Abfuhr-Wasserkanal hinter der Auslassöffnung weiterlaufen bzw. weitergeführt sein. Dabei kann er gleichen oder gleichbleibenden Kanalquerschnitt aufweisen. Der Abfuhr-Wasserkanal kann hin zu einer Verbindung mit einem Pumpeneinlass einer Umflutpumpe laufen, wobei eine solche Umflutpumpe dazu dient, Wasser entlang des Abfuhr-Wasserkanals zu pumpen, insbesondere in einem Kreislauf, wenn dieser Abfuhr-Wasserkanal einen solchen Kreislauf bildet. Ein Pumpenauslass der Umflutpumpe geht in einen Wasserkanal über, der hin zu einem Pumpenauslass der mindestens einen Dosierpumpe führt. Dabei kann er einen Zufuhrkanal bilden. Hinter der Dosierpumpe bzw. ihres Pumpenauslasses verläuft der Kanal dann als Abfuhr-Wasserkanal weiter. Somit mündet der Pumpenauslass der Dosierpumpe, insbesondere alle Pumpenauslässe aller Dosierpumpen, in den Abfuhr-Wasserkanal. Dies kann insbesondere in dem vorgenannten Kanalabschnitt mit kleinerem Kanalquerschnitt, insbesondere sehr viel kleinerem Kanalquerschnitt, sein. Damit ist es mit dieser Umflutpumpe möglich, Wasser, welches nicht Frischwasser ist, im Kreislauf in der Verteilabdeckung zu pumpen und somit entweder mehrfach Waschmittel oder Zusatzstoffe darin einzubringen, alternativ um diese mit umgepumptem Wasser möglichst gut zu vermischen, bevor sie restlos durch die Auslassöffnung in die erste Aufnahmekammer und von dort in die Trommel oder in den Trommelaufnahmebehälter gelangen.

In vorteilhafter Ausgestaltung der Erfindung sind mehrere Dosierpumpen vorgesehen, insbesondere zwei bis fünf Dosierpumpen. Diese können besonders vorteilhaft nebeneinander angeordnet sein, insbesondere an der Verteilabdeckung, wobei sie auch an der Verteilabdeckung befestigt bzw. montiert sein können. Bevorzugt sind sie an der lateralen Außenseite befestigt, auf alle Fälle aber an den Kanalöffnungen der Zufuhr-Wasserkanäle, also an deren Enden. So ist je ein Pumpeneinlass jeder Dosierpumpe mit einem Zufuhr-Wasserkanal an der oben genannten Kanalöffnung verbunden. Ein Pumpenauslass jeder Dosierpumpe mündet in den Abfuhr-Wasserkanal, vorteilhaft in einem speziellen Kanalabschnitt, der besonders vorteilhaft den zuvor genannten kleineren Kanalquerschnitt aufweist. Hier kann dazwischen eine kurze Leitung oder ein kurzer Kanal vorgesehen sein.

Ähnlich wie die Dosierpumpen bevorzugt nebeneinander mit gewissem Abstand vorgesehen sind, beispielsweise 2 cm bis 5 cm, sollten die Pumpenauslässe der Dosierpumpen entlang des Abfuhr-Wasserkanals hintereinander in diesen münden. Auch sie sollten vorteilhaft gleichen Abstand zueinander aufweisen. So ist ein gleichmäßiges und vorteilhaftes Eindosieren möglich.

Ein weiterer Vorteil davon, dass die Dosierpumpen derart an der Verteilabdeckung befestigt bzw. montiert sind, dass sie seitlich abstehen, besteht darin, dass die Bauhöhe der Verteilabdeckung geringer gehalten werden kann. Insbesondere kann dann eine vorgenannte Aufnahme mit ausreichend Platz unter der Verteilabdeckung angeordnet sein.

In möglicher Ausgestaltung der Erfindung können die anderen Aufnahmekammern der Aufnahme, die nicht die erste Aufnahmekammer sind, einfach nach oben offen sein. Insbesondere können sie über den wesentlichen Teil ihrer Grundfläche oder über ihre gesamte Grundfläche nach oben offen sein. So ist es leicht möglich, einen geschlossenen Behälter wie einen Tank oder eine Kartusche mit Waschmittel oder Zusatzstoff darin in die Aufnahmekammern einzubringen oder einzusetzen. Ein solcher Behälter sollte dann Verbindungsmittel an den genannten Zufuhr-Wasserkanal aufweisen, der hin zu der Dosierpumpe führt. Derartige Verbindungsmittel können beispielsweise ein genannter flexibler Schlauch sein, alternativ Teleskopleitungen mit mehreren festen, ineinandergesteckten Leitungsabschnitten. Eine Möglichkeit ist ein steckbarer Einsatz mit Schläuchen am Unterteil des Waschmittelverteilers.

Für die Verteilabdeckung ist vorteilhaft vorgesehen, dass sie geschlossen ausgebildet ist bis auf die vorgenannten Anschlüsse für Pumpen bzw. Dosierpumpen und eine mögliche Umflutpumpe, die genannten Wasseranschlüsse von außen, die in die Verteilabdeckung hineinführen, eine Auslassöffnung in die erste Aufnahmekammer hinein und ggf. Öffnungen für Waschmittelbehälter oder Zusatzstoffbehälter in einer der anderen Aufnahmekammern. Dabei kann vorgesehen sein, dass die Verteilabdeckung ein Unterteil und ein Oberteil aufweist, wobei vorteilhaft die genannten Wasserkanäle in dem Unterteil ausgebildet sind. Schließlich ist die Aufnahme unterhalb der Verteilabdeckung angeordnet, so dass die Auslassöffnung und Verbindungen in die anderen Aufnahmekammern nach unten gehen. Dabei kann vorgesehen sein, dass das Oberteil relativ einfach ausgebildet ist, insbesondere als flache Platte ausgebildet ist, die dann auf das Unterteil aufgesetzt wird oder auf dieser mit Schnappverbindungen und entsprechenden Dichtungen befestigt wird, alternativ auch dauerhaft verklebt wird. Insbesondere kann die Verteilabdeckung zweiteilig ausgebildet sein, also nur aus Unterteil und Oberteil bestehen. Das Unterteil sollte dichtend auf dem Oberteil befestigt sein, insbesondere können die Wasserkanäle, zumindest der Abfuhr-Wasserkanal, als offene längliche Vertiefung in dem Unterteil ausgebildet sein. Durch den Verschluss von oben mittels des Oberteils wird dann ein solcher Wasserkanal zu einem geschlossenen Wasserkanal. Dann kann vorteilhaft vermieden werden, dass Wasser oder Waschmittel bzw. Zusatzstoffe herausspritzen.

Eine weitere vorteilhafte Möglichkeit zur Herstellung einer Verteilabdeckung, die dann insbesondere auch einteilig ausgebildet sein kann, ist 3D-Druck aus Kunststoff. So können auch sehr vorteilhafte Formen, insbesondere auch der Wasserkanäle, hergestellt werden, insbesondere geschlossene Wasserkanäle. Dadurch können Dichtigkeitsprobleme leicht vermieden werden. Des Weiteren ist eine Montage des Waschmittelverteilers leichter möglich.

In weiterer vorteilhafter Ausgestaltung der Erfindung kann zumindest das Innere oder das Innenvolumen der Verteilabdeckung ohne bewegbare Teile ausgebildet sein. Dies bedeutet dann, dass bewegbare Teile bzw. Funktionseinheiten wie Ventile, Pumpen odgl. zusätzlich an der Verteilabdeckung angebracht werden müssen, insbesondere an einer Außenseite derart, dass in der Verteilabdeckung dann entsprechende Kanäle zu diesen Funktionseinheiten geführt sind. Dadurch kann möglicherweise ein größerer Aufwand vermieden werden bei der Herstellung der Verteilabdeckung. Des Weiteren können so die extern angebrachten Funktionseinheiten wie Ventile oder Pumpen im Fehlerfall leichter repariert oder ausgetauscht werden, da sie leichter erreichbar sind.

In möglicher Ausgestaltung der Erfindung kann der Waschmittelverteiler eine Heizeinrichtung für die Verteilabdeckung aufweisen, wobei die Heizeinrichtung insbesondere an der Verteilabdeckung vorgesehen bzw. angeordnet ist. Damit sollen innerhalb der Verteilabdeckung fließendes Wasser, Waschmittel und/oder genannte Zusatzstoffe beheizt bzw. aufgewärmt werden können. Dies dient weniger dazu, Wasser auf höhere Temperaturen wie 60°C bis zu 90°C für entsprechende Waschvorgänge in der Waschmaschine aufzuheizen. Vorteilhaft ist vielmehr vorgesehen, das Waschmittel bzw. vor allem die Zusatzstoffe selbst aufzuwärmen, um ihre Wirksamkeit zu erhöhen bzw. zu maximieren. So können manche Enzyme bei Temperaturen, die über Raumtemperatur liegen bzw. über der Temperatur von zulaufendem Frischwasser liegen, besonders gut wirken. Alternativ kann eine Viskosität durch Erwärmen verändert werden bzw. bei höheren Temperaturen können Waschmittel oder Zusatzstoffe dünnflüssiger werden, was eine Verwendung verbessert. Dabei kann ein Aufwärmen auf Temperaturen von 30°C bis 40°C bereits ausreichend sein. Dazu kann eine Heizeinrichtung auch lokal nahe der Zusatzstoffe oder deren Zufuhr-Wasserkanälen angeordnet sein.

Eine derartige Heizeinrichtung kann grundsätzlich vielfältig ausgebildet sein. Eine bevorzugte Möglichkeit ist eine Induktionsheizspule, die insbesondere an einer Oberseite der Verteilabdeckung angeordnet ist und zumindest einen Teil, insbesondere zwischen 50% und 90%, der Fläche der Oberseite der Verteilabdeckung bedeckt. Insbesondere sollte sie im Bereich des vorgenannten Abfuhr-Wasserkanals angeordnet sein, beispielsweise auch direkt dort, wo Dosierpumpen Waschmittel und/oder Zusatzstoffe mittels des Zufuhr-Wasserkanals in den Abfuhr-Wasserkanal einbringen. Innerhalb der Verteilabdeckung, vorteilhaft möglichst nahe an den Wasserkanälen, kann dann induktiv beheizbares Material angeordnet sein. Dieses kann in Form von induktiv beheizbaren Metallstäben oder kleinen Metallstücken, alternativ Metallgitter oder Metallpulver, vorgesehen sein. Insbesondere kann dieses induktiv beheizbare Material in einem vorgenannten Unterteil der Verteilabdeckung angeordnet sein, also möglichst nahe an den Wasserkanälen. Alternativ könnte es auch an dem Oberteil vorgesehen sein, möglicherweise auch zusätzlich, welches auch im direkten Kontakt mit dem Unterteil sowie den Wasserkanälen ist.

Eine erfindungsgemäße Waschmaschine weist also einen zuvor beschriebenen Waschmittelverteiler auf sowie ein Gehäuse als Außengehäuse. In dem Gehäuse befindet sich ein Trommelaufnahmebehälter mit der Trommel darin, welche mittels einer Tür zugänglich ist. Des Weiteren weist die Waschmaschine eine Wasserführung und eine Waschmaschinensteuerung auf, wobei die Wasserführung Wasserleitungen und eine Pumpe, insbesondere auch Filter sowie eine Heizeinrichtung, aufweist, wobei die Heizeinrichtung in die Pumpe integriert sein kann. Der Waschmittelverteiler kann vorteilhaft in einem oberen Bereich der Waschmaschine angeordnet sein, so dass er für eine Bedienperson gut erreichbar ist. Hier bietet sich ein oberer linker Bereich an, wie häufig üblich bei Waschmaschinen, oder ein oberer rechter Bereich. So kann der jeweils oben links und oben rechts neben der Trommel vorhandene Bauraum im Gehäuse genutzt werden.

In Weiterbildung der Erfindung kann vorgesehen sein, dass die Waschmaschine unter dem Waschmittelverteiler, insbesondere unterhalb eines genannten Kammerauslasses aus der ersten Aufnahmekammer der Aufnahme, eine Auffangvorrichtung aufweist. Diese kann nach Art eines Trichters ausgebildet sein. Von ihr kann eine Wasserleitung in den Trommelaufnahmebehälter führen, um entweder Frischwasser oder mit Waschmittel und/oder Zusatzstoffen versetztes Wasser in den Trommelaufnahmebehälter und somit in die Trommel und auf darin vorhandene Wäsche zu bringen.

Vorteilhaft kann für die erste Aufnahmekammer der Aufnahme vorgesehen sein, dass der Kammerauslass in Längsrichtung gesehen an einem Ende angeordnet ist, insbesondere am hinteren Ende. So kann im vorderen Bereich, der bei einer herausziehbaren Ausgestaltung der Aufnahme nach Art einer Schublade gut erreichbar ist, von oben Waschmittel odgl. eingefüllt werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### Kurzbeschreibung der Zeichnungen

Ein Ausführungsbeispiel der Erfindung ist in den Zeichnungen dargestellt und wird im Folgenden näher erläutert. In den Zeichnungen zeigen:
- Fig. 1: eine schematische seitliche Funktionsansicht einer erfindungsgemäßen Waschmaschine mit einem erfindungsgemäßen Waschmittelverteiler,
- Fig. 2: eine Vorderansicht der Waschmaschine aus Fig. 2 mit Darstellung der Anordnung des Waschmittelverteilers oben links an der Vorderseite der Waschmaschine,
- Fig. 3: eine Schrägansicht von oben auf den erfindungsgemäßen Waschmittelverteiler ohne Oberteil einer Verteilabdeckung mit Kanälen darin,
- Fig. 4: eine Ansicht des Waschmittelverteilers aus Fig. 3 von vorne mit angedeutetem Oberteil der Verteilabdeckung und seitlich angeordneten Dosierpumpen,
- Fig. 5: eine Draufsicht auf den Waschmittelverteiler aus Fig. 3 bzw. auf die Oberseite der Verteilabdeckung,
- Fig. 6: eine Unteransicht der Verteilabdeckung aus Fig. 5,
- Fig. 7: eine Schrägdarstellung der Verteilabdeckung von hinten ohne Schublade darunter und
- Fig. 8: eine Unteransicht der Verteilabdeckung in Schrägdarstellung ohne Schublade darunter.

### Detaillierte Beschreibung der Ausführungsbeispiele

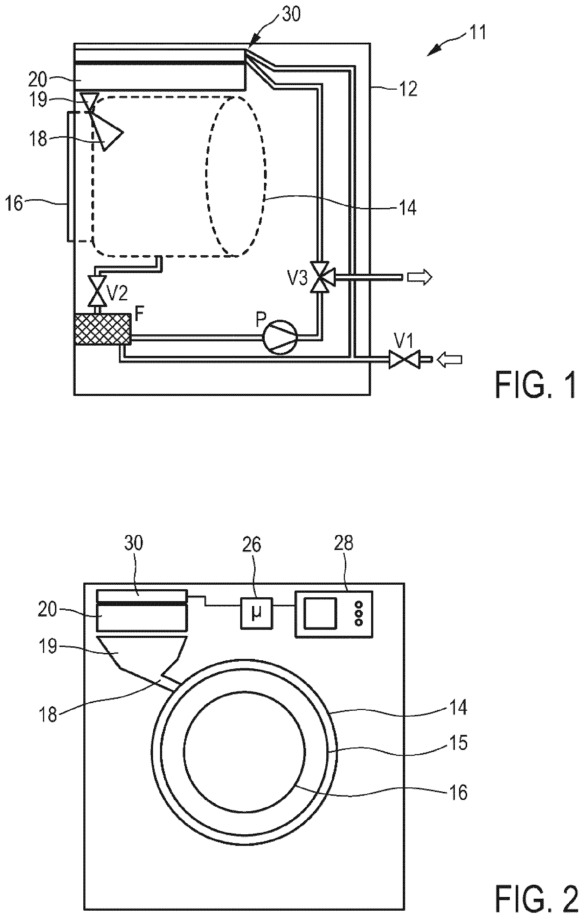

In der Fig. 1 ist eine erfindungsgemäße Waschmaschine 11 mit einem Gehäuse 12 von der Seite dargestellt, und zwar im Wesentlichen funktional und vereinfacht. Eine Vorderansicht dieser Waschmaschine 11 ist in der Fig. 2 dargestellt. In dem Gehäuse 12 ist ein Trommelaufnahmebehälter 14 angeordnet mit einer darin angeordneten und drehbaren Trommel 15, zu der eine Zugangstür 16 an der Vorderseite führt. Eine Wasserzuführung 18 ragt von oben in den Trommelaufnahmebehälter 14, beispielsweise ausgebildet als einfacher Wasserauslass oder als Sprühdüse. Das Wasser kommt von einem Auffangtrichter 19 unterhalb einer Schublade 20, die Teil eines erfindungsgemäßen Waschmittelverteilers 30 ist. Dies wird nachfolgend noch im Detail erläutert.

Eine Wasserführung innerhalb der Waschmaschine 11 führt von dem Trommelaufnahmebehälter 14 über ein Ventil V2 zu einem Filter F. Wasser kann in den Filter F einerseits von außen über ein Ventil V1 eingebracht werden, wobei dieses Wasser vom Ventil V1 auch direkt an den Waschmittelverteiler 30 gelangen kann.

Von dem Filter F kann Wasser zu einer Pumpe P gelangen und von dort zu einem Drei-Wege-Ventil V3. Einerseits kann Wasser aus der Waschmaschine 11 herausgepumpt werden zu einem Abfluss. Andererseits kann Wasser, beispielsweise in einer Art Kreislauf über die Trommel 15 bzw. den Trommelaufnahmebehälter 14, nach oben hin zum Waschmittelverteiler 30 und/oder zur Schublade 20 gepumpt werden.

Aus der Vorderansicht der Fig. 2 wird deutlicher, wie Wasser aus der Schublade 20 auf an sich übliche Art und Weise in einen darunter angeordneten Auffangtrichter 19 und von dort über die Wasserzuführung 18 in den Trommelaufnahmebehälter 14 gelangen kann.

Des Weiteren ist zu erkennen, dass die Waschmaschine 11 eine Steuerung 26 aufweist. Diese ist sowohl nach links mit dem Waschmittelverteiler 30 verbunden als auch nach rechts mit einer Bedieneinrichtung 28. Diese Bedieneinrichtung 28 kann ausgebildet sein wie an sich aus dem Stand der Technik bekannt, vorteilhaft mit einer Anzeige und Bedienelementen wie üblich. Vor allem kann die Steuerung 26 auch den Waschmittelverteiler 30 bzw. dessen Funktionseinheiten, die im Folgenden beschrieben werden, insbesondere die Dosierpumpen, steuern.

In der Schrägdarstellung auf eine detaillierte Ausgestaltung des Waschmittelverteilers 30, allerdings ohne Oberteil auf einem Unterteil 35, ist dessen innere Ausgestaltung mit Wasserkanälen in dem eingangs genannten Innenvolumen der Verteilabdeckung 33 dargestellt. Außerdem ist auch die Anordnung der Schublade 20 darunter sowie der Dosierpumpen 67 bis 69 an der rechten Außenseite samt der Umflutpumpe 70 dargestellt. Es können auch verschiedene Typen von Dosierpumpen sein, beispielsweise Peristaltikpumpen und Zahnradpumpen, beispielsweise abhängig von der Art der Zusatzstoffe.

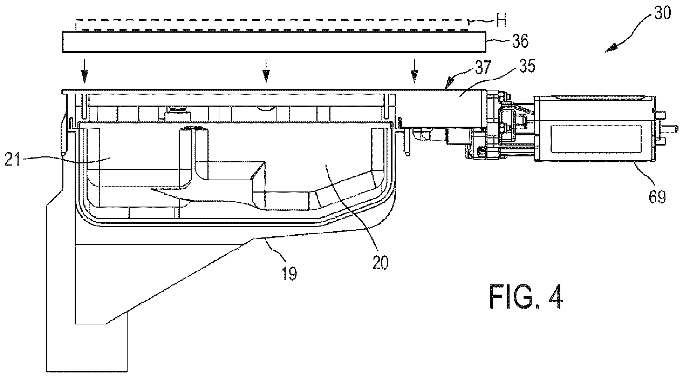

Die Verteilabdeckung 33 besteht im Wesentlichen aus einem Unterteil 35 mit einer Oberseite 37, die plan ist bzw. in einer Ebene verläuft bis auf darin ausgebildete Wasserkanäle. Die Vorderansicht der Fig. 4 zeigt, dass ein Oberteil 36 der Verteilabdeckung 33 darauf bzw. auf die Oberseite 37 aufgesetzt und dort befestigt werden kann, beispielsweise angeklebt. Diese Oberseite 37 ist vorteilhaft als dünne Platte ausgebildet und weist an ihrer Unterseite zur Oberseite 37 des Unterteils 35 hin eine geschlossene und plane Fläche auf. An der Oberseite des Oberteils 36 ist gestrichelt eine Heizeinrichtung H dargestellt, mit der die Verteilabdeckung 33 und insbesondere darin befindliche oder bewegte Flüssigkeit wie Wasser samt Waschmittel und Zusatzstoffen erwärmt werden kann. Dazu kann beispielsweise im Material des Unterteils 35 der Verteilabdeckung 33 induktiv beheizbares Material angeordnet sein, beispielsweise Metallpulver, Metallspäne oder größere Metallstäbe. Dann kann die Heizeinrichtung H eine Induktionsheizspule sein und mit beherrschbarer Temperatur, vorzugsweise durch Einsatz von Temperatursensoren, eine Heizwirkung haben.

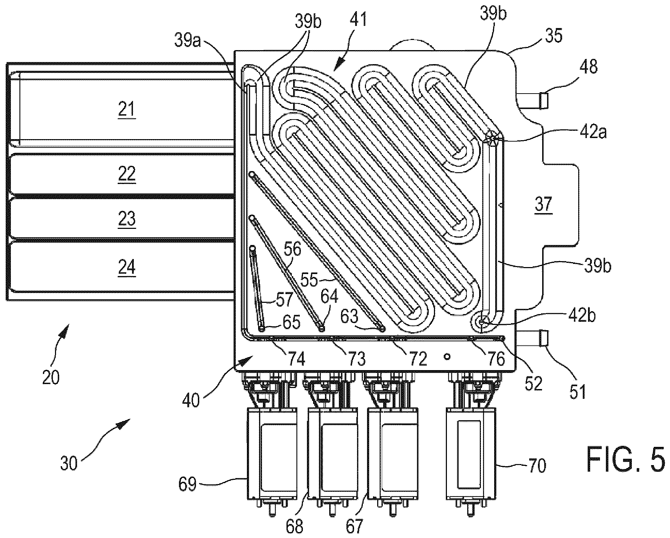

An der Oberseite 37 des Unterteils 35 bzw. in dieser Oberseite 37 selbst ist vor allem ein Abfuhr-Wasserkanal 39 vorgesehen, und zwar als schmaler Abfuhr-Wasserkanal 39a entlang der nach rechts unten weisenden Seite und entlang der nach links unten weisenden Seite. Hier ist also ein erster Bereich 40 gebildet, insbesondere im rechten unteren Eckbereich, in dem der Abfuhr-Wasserkanal 39a eben schmal ist bzw. relativ kleinen Querschnitt aufweist. Am nach links weisenden Eck des Unterteils 35 geht der schmale Abfuhr-Wasserkanal 39a in den breiten Abfuhr-Wasserkanal 39b über. Mit dieser größeren Breite und auch größerer Tiefe sowie insgesamt viel größerem Kanalquerschnitt verläuft er dann in einem zweiten Bereich 41 in Mäanderform. Mehrere gerade Stücke schließen mit Biegungen um 180° aneinander an, um im genannten zweiten Bereich 41 eine möglichst große Länge mit einer Vielzahl solcher Biegungen um 180° unterzubringen. Wie auch beispielsweise die Draufsicht der Fig. 5 zeigt, kann der Kanalquerschnitt des Abfuhr-Wasserkanals 39a im ersten Bereich 40 etwa ein Zwanzigstel vom Kanalquerschnitt des Abfuhr-Wasserkanals 39b im zweiten Bereich 41 betragen.

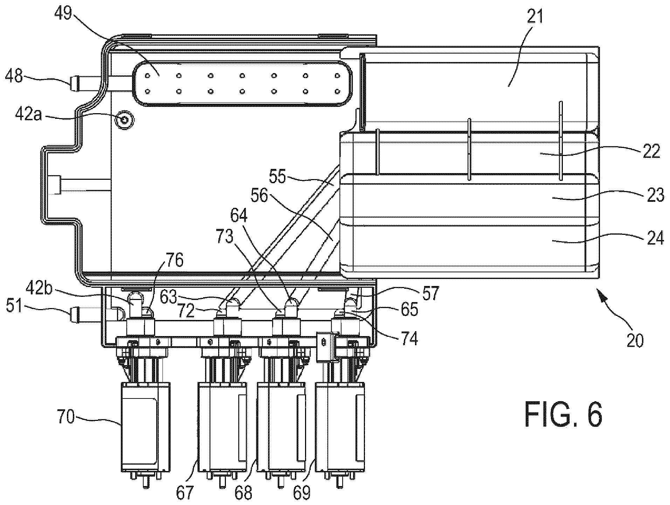

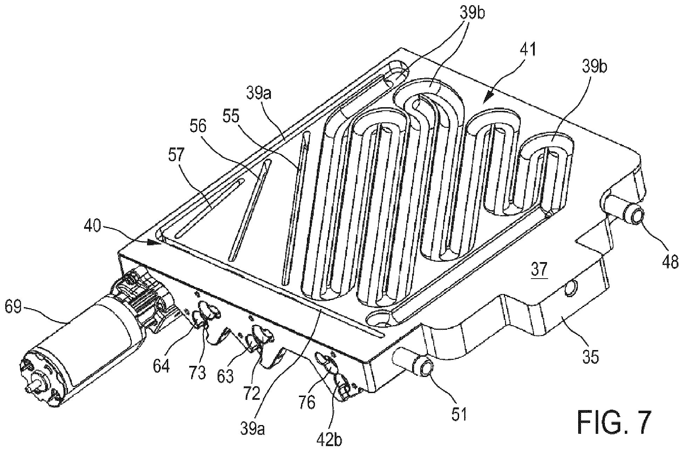

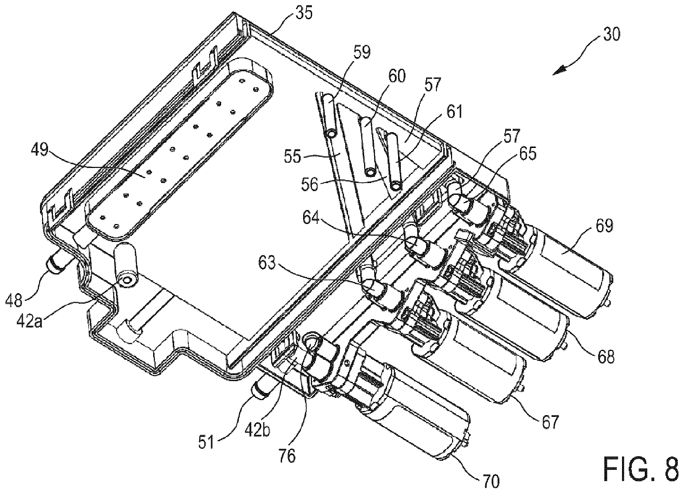

Wie die Draufsicht auf die Verteilabdeckung 33 bzw. auf das Unterteil 35 gemäß Fig. 5 zeigt, ist im hinteren linken Eckbereich des zweiten Bereichs 41 eine Auslassöffnung 42a vom Abfuhr-Wasserkanal 39b nach unten vorgesehen. Die Unteransicht der Verteilabdeckung 33 gemäß Fig. 6 zeigt diese Auslassöffnung 42a. An dieser Auslassöffnung 42a vorbei geht der Abfuhr-Wasserkanal 39b aber noch weiter und endet dann kurz vor dem rechten oberen Beginn des schmalen Abfuhr-Wasserkanals 39a. Hier erfolgt kein Übergang, sondern Wasser kann nach unten durch eine weitere Auslassöffnung 42b austreten. Wie wiederum die Unteransicht der Fig. 6 zeigt, geht diese Auslassöffnung 42b mit einem kurzen Rohrbogen zur lateralen Außenseite hin. Dies zeigt auch die schräge Unteransicht der Fig. 8. Gemäß der schrägen Ansicht von oben aus Fig. 7 geht die Auslassöffnung 42b zu einer Öffnung an der lateralen Außenseite. Der Zweck wird nachfolgend noch näher erläutert.

Die Draufsicht der Fig. 5 und 7 zeigt ganz gut, dass ein Großteil der Oberseite 37 des Unterteils 35 ausgenutzt ist, vor allem um dort die Abfuhr-Wasserkanäle 39a und 39b mit insgesamt maximal möglicher Länge anzuordnen. Durch diese maximale Länge kann beispielsweise auch ein Beheizen von darin entlangströmendem Wasser mittels der Heizeinrichtung H entsprechend Fig. 4 erfolgen. Vor allem aber ist eine Durchmischung mit den vorgenannten Zusatzstoffen sehr gut möglich.

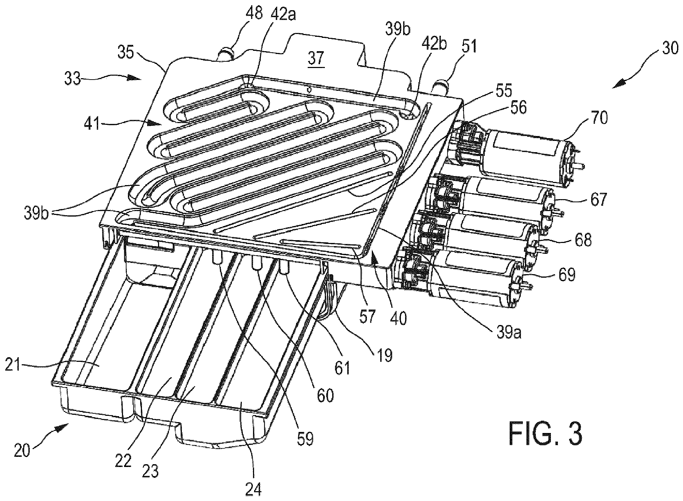

Die Schublade 20, die gemäß Fig. 3 bis 6 herausziehbar in dem Waschmittelverteiler 30 und unter der Verteilabdeckung 33 angeordnet ist, kann im Wesentlichen ausgebildet sein wie aus dem Stand der Technik bekannt. Ganz links weist die Schublade 20 eine erste Aufnahmekammer 21 auf, welche am breitesten ausgebildet ist und das größte Aufnahmevolumen hat. Sie ist nach oben offen, hier können manuell Waschpulver und sonstige Zusatzstoffe eingefüllt werden für einen Waschvorgang. Die erste Aufnahmekammer 21 kann nach unten bzw. insbesondere nach hinten und unten offen sein, so dass eintretendes Wasser das Waschmittel herausspülen kann. So kann es in den gemäß Fig. 4 darunter angeordneten Auffangtrichter 19 gelangen und von dort gemäß der Fig. 1 und 2 über die Wasserzuführung 18 in den Trommelaufnahmebehälter 14.

Rechts neben der ersten Aufnahmekammer 21 sind eine zweite Aufnahmekammer 22, eine dritte Aufnahmekammer 23 und eine vierte Aufnahmekammer 24 nebeneinander angeordnet. Sie können untereinander unterschiedliche Breite aufweisen und insbesondere schmaler ausgebildet sein als die erste Aufnahmekammer. Im hier dargestellten Ausführungsbeispiel sind die Aufnahmekammern 22 bis 24 nach oben offen, ähnlich wie die erste Aufnahmekammer 21. Sie können mit speziellen Zusatzstoffen gefüllt sein, die nur ab und zu bzw. abhängig von der zu waschenden Wäsche und einem gewählten Waschprogramm gebraucht werden. Vor allem erfolgt ihre Dosierung nicht manuell wie an der ersten Aufnahmekammer 21, sondern die Waschmaschine selbst nimmt eine automatische Dosierung vor, insbesondere mittels der Steuerung 26. Dies ist eingehend ja grundsätzlich erläutert worden.

Hinten links ist ein erster Wassereinlass 48 als länglicher, abstehender Stutzen am Unterteil 35 angeformt. Gemäß der Unteransichten der Fig. 6 und 8 fließt Wasser zum ersten Wassereinlass 48 hinein, beispielsweise Frischwasser vom Ventil V1 oder von der Pumpe P und vom Ventil V3 entsprechend Fig. 1. Es fließt im Unterteil 35 zu dem Wasserverteiler 49, der vierzehn nach unten weisende kleine Öffnungen aufweist. Diese sind oberhalb der ersten Aufnahmekammer 21 angeordnet, wenn diese samt Schublade 20 vollständig eingeschoben ist. So kann Frischwasser in großer Menge einströmen und Waschmittel aus der ersten Aufnahmekammer 21 auf an sich bekannte Art und Weise ausspülen.

Gemäß der Fig. 3, 5 und 7 sind an der Oberseite 37 des Unterteils 35 drei weitere Wasserkanäle vorgesehen, und zwar ein erster Zufuhr-Wasserkanal 55, ein zweiter Zufuhr-Wasserkanal 56 und ein dritter Zufuhr-Wasserkanal 57. Sie sind einerseits über nach unten weisende Öffnungen mit Ansaugstutzen 59, 60 und 61 verbunden, die nach unten in die Schublade 20 reichen und somit in Flüssigkeit in einer der entsprechenden Aufnahmekammern eingetaucht sind. In die zweite Aufnahmekammer 22 reicht der erste Ansaugstutzen 59, der mit dem ersten Zufuhr-Wasserkanal 55 verbunden ist. In die dritte Aufnahmekammer 23 reicht der zweite Ansaugstutzen 60, der zum zweiten Zufuhr-Wasserkanal 56 führt. In die vierte Aufnahmekammer 24 reicht der dritte Ansaugstutzen 61, der mit dem dritten Zufuhr-Wasserkanal 57 wasserleitend verbunden ist. Diese drei Zufuhr-Wasserkanäle 55 bis 57 verlaufen in unterschiedlicher Schrägrichtung und unterschiedlicher Länge im rechten unteren Eckbereich des Unterteils 35 gemäß Fig. 5.

Der erste Zufuhr-Wasserkanal 55 weist an seinem Ende rechts oben eine erste Kanalöffnung 63 nach unten auf. Diese geht gemäß den Fig. 6 und 8 ähnlich wie die Auslassöffnung 42b in einen kurzen Rohrbogen über, der an der in Fig. 7 zu erkennenden lateralen Außenseite die von außen zugängliche erste Kanalöffnung 63 bildet.

In entsprechender Form endet der zweite Zufuhr-Wasserkanal 56 an seinem rechten oberen Ende in einer zweiten Kanalöffnung 64. Auch sie führt von der Unterseite des Unterteils 35 in einem kurzen Rohrabschnitt zur lateralen Außenseite, wo die zweite Kanalöffnung 64 gebildet ist. Der dritte Zufuhr-Wasserkanal 57 weist an seinem rechten Ende eine dritte Kanalöffnung 65 auf. Auch sie führt an der Unterseite des Unterteils 35 zu einem kurzen Rohrbogen und an die laterale Außenseite. Bei der Fig. 7 ist hier eine einzige dritte Dosierpumpe 69 dargestellt. Gemäß den Fig. 3 bis 5 gibt es weitere solche Dosierpumpen. An der ersten Kanalöffnung 63 bzw. für diese ist eine erste Dosierpumpe 67 montiert und angeschlossen. An der zweiten Kanalöffnung 64 bzw. für diese ist eine zweite Dosierpumpe 68 vorgesehen und angeordnet. So können diese Dosierpumpen 67 bis 69 Zusatzstoffe aus den Aufnahmekammern 22 bis 24 über die Zufuhr-Wasserkanäle 55 bis 57 ansaugen. Wie die schräge Ansicht auf die laterale Außenseite der Fig. 7 zeigt, ist die hier nicht dargestellte Dosierpumpe 67 mit einem Pumpeneinlass mit der ersten Kanalöffnung 63 verbunden. Ein Pumpenauslass ist mit der hier dargestellten ersten Mündungsöffnung 72 verbunden. Diese Mündungsöffnung 72 führt über einen kurzen Rohrbogen nach oben und endet gemäß Fig. 5 als erste Mündungsöffnung 72 im schmalen Bereich des Abfuhr-Wasserkanals 39a. Somit kann der von der Dosierpumpe 67 aus der zweiten Aufnahmekammer 22 angesaugte, dort befindliche Zusatzstoff an der ersten Mündungsöffnung 72 in den schmalen Bereich des Abfuhr-Wasserkanals 39a eingebracht werden. Entsprechend ist für die zweite Dosierpumpe 68 an der zweiten Kanalöffnung 64 eine zweite Mündungsöffnung 73 vorgesehen. Für die in Fig. 7 montierte dritte Dosierpumpe 69 ist eine dritte Mündungsöffnung 74 dargestellt. Über die drei Mündungsöffnungen 72 bis 74 können also die Zusatzstoffe aus den Aufnahmekammern 22 bis 24 in den Abfuhr-Wasserkanal 39a und letztlich in den Trommelaufnahmebehälter 14 mit Wasser eingespült werden.

Damit aber nun die Zusatzstoffe entlang des Abfuhr-Wasserkanals 39a transportiert bzw. gespült werden können, ist hinten rechts am Unterteil 35 ein zweiter Wassereinlass 51 nach Art eines kurzen Rohrstutzens vorgesehen. Gemäß den Unteransichten der Fig. 6 und 8 geht eine Öffnung in diesem zweiten Wassereinlass 51 nach oben mit einem kurzen Rohrbogen und mündet als Auslassöffnung 52 in den Anfang des schmalen Abfuhr-Wasserkanals 39a. Somit kann zum zweiten Wassereinlass 51 einströmendes Wasser den gesamten Abfuhr-Wasserkanal 39a und 39b entlangströmen. Zudosierte Zusatzstoffe werden dabei mitgespült und vor allem im zweiten Bereich 41 mit dem großen Kanalquerschnitt sowie entsprechend langsamem Strömen und der 180°-Biegungen darin gut miteinander vermischt bzw. mit dem Wasser gemischt und darin gelöst und somit möglichst gleichmäßig darin verteilt. Des Weiteren kann vor allem im Bereich der Mündungsöffnungen 72 bis 74 mit durchströmendem Wasser eine sehr gute Sauberkeit bzw. auch Hygiene erreicht werden.

Die genaue Art der Eindosierens von den Dosierpumpen 67 bis 69 an die Mündungsöffnungen 72 bis 74 ist hier nicht genau zu erkennen. Sie spielt im Detail auch keine Rolle, wichtig ist eben, dass die Zusatzstoffe gut und möglichst ohne Rückstände weggespült werden können.

Die vorgenannte Auslassöffnung 42b an der lateralen Außenseite des Unterteils 35 kann zu einer Umflutpumpe 70 führen. Diese kann grundsätzlich ähnlich ausgebildet sein wie die Dosierpumpen 67 bis 69, möglicherweise kann sie für eine höhere Pumpleistung ausgelegt sein. Dafür muss sie nicht so genau arbeiten wie die Dosierpumpen 67 bis 69. Die drei Dosierpumpen 67, 68 und 69 sind vorteilhaft sämtlich identisch. So braucht nur ein einziger Typ von Dosierpumpe verwendet zu werden. In ähnlicher Form könnte auch die Umflutpumpe 70 vom selben Pumpentyp sein bzw. identische Bauform aufweisen. Eine Steuerung der Pumpen 67 bis 70 erfolgt vorteilhaft mittels der Steuerung 26. Ebenso kann sie einen Betrieb der Heizeinrichtung H steuern.

Ein Pumpenauslass der Umflutpumpe 70 ist mit der in Fig. 7 dargestellten Mündungsöffnung 76 verbunden, welche gemäß der Draufsicht der Fig. 5 knapp unterhalb der Auslassöffnung 52 in den Abfuhr-Wasserkanal 39a mündet. Somit kann mittels der Umflutpumpe 70 Wasser sozusagen im Kreislauf entlang der Abfuhr-Wasserkanäle 39a und 39b gepumpt werden. Bei entsprechenden Strömungsgeschwindigkeiten ist die Menge von durch die erste Auslassöffnung 42a nach unten in die erste Aufnahmekammer 21 abströmendem Wasser nicht sehr groß. Entsprechend können auch die Querschnitte der Auslassöffnungen 42a und 42b ausgebildet sein. Arbeitet die Umflutpumpe 70 nicht, so ist die Auslassöffnung 42b sozusagen verschlossen bzw. Wasser kann nicht durch diese vom Ende des Abfuhr-Wasserkanals 39b abfließen. Hier könnten ggf. eine Drossel, die erst bei einem bestimmten Grenz-Druck öffnet, oder noch besser ein ansteuerbares Ventil vorgesehen sein, um einen Durchfluss durch die Auslassöffnungen 42a und/oder 42b nach unten steuern bzw. sperren und öffnen oder sogar regulieren zu können. Dann ist keine Abhängigkeit von Strömungsgeschwindigkeiten oder ggf. Drücken gegeben. Ein Ventil kann als einfaches Absperrventil ausgebildet sein, ist also einfach und robust.

Der Vergleich der Ansichten auf die Verteilabdeckung 33 bzw. das Unterteil 35 von oben und von unten zeigt, dass dessen Herstellung, insbesondere wenn sie einteilig sein soll, sehr komplex ist. Deswegen ist es möglich, das Unterteil 35 mittels 3D-Druck herzustellen. So können auch die zuvor beschriebenen Rohrbögen an der Unterseite des Unterteils 35 leicht hergestellt werden. Alternativ könnten sie auch als separate Teile an dem Unterteil 35 anmontiert bzw. angeklebt werden.

Anstelle der Ansaugstutzen 59 bis 61, die in der Fig. 8 noch einmal dargestellt sind, könnten an kürzere Ansaugstutzen auch flexible und möglicherweise auch längenveränderliche Schläuche angeschlossen werden. Diese könnten mit Kartuschen odgl. verbunden werden, die in einer der Aufnahmekammern 22 bis 24 angeordnet sind. So könnten sie die genannten offenen Aufnahmekammern mit offen angeordneten Zusatzstoffen auf praktische Art ersetzen.

Einer der großen Vorteile des erfindungsgemäßen Waschmittelverteilers 30 samt der speziellen Verteilabdeckung 33 liegt darin, dass durch die Herstellung als ein einziges Teil diese Herstellung möglicherweise etwas aufwändiger ist. Dafür ist eine spätere Montage zum gesamten Waschmittelverteiler 30 sehr viel einfacher. Vor allem können auch Probleme mit Wasserdichtheit vermieden werden. Wird das Oberteil 36 gemäß der Fig. 4 auf der Oberseite 37 des Unterteils 35 befestigt, vorteilhaft aufgeklebt, sind die zu erkennenden nach oben offenen Abfuhr-Wasserkanäle 39a und 39b sozusagen nach oben bzw. nach außen abgedichtet.

## Patentansprüche

1. Waschmittelverteiler für eine Waschmaschine, um in dem Waschmittelverteiler Waschmittel und/oder Zusatzstoffe odgl. mit Wasser zusammenzubringen und weiterzuleiten in eine Trommel der Waschmaschine mit Wäsche darin, wobei der Waschmittelverteiler aufweist:
- eine Aufnahme, insbesondere ausgebildet als herausziehbare Schublade, wobei die Aufnahme mehrere Aufnahmekammern aufweist,
- wobei mindestens eine erste Aufnahmekammer nach unten einen Kammerauslass aufweist und nach oben offen ist, und
- wobei mindestens eine Aufnahmekammer nach unten geschlossen ist, insbesondere nach oben eine Öffnung aufweist bzw. offen ist,
- eine flächige Verteilabdeckung, die oberhalb der Aufnahme angeordnet ist, wobei
- die Verteilabdeckung ein Innenvolumen aufweist mit voneinander getrennten Wasserkanälen darin,
- mehrere Wasserkanäle zu einer lateralen Außenseite der Verteilabdeckung geführt sind und dort Kanalöffnungen bilden,
- mehrere Wasserkanäle in der Verteilabdeckung zusammengeführt sind, und
- mindestens ein Abfuhr-Wasserkanal eine Auslassöffnung oberhalb der mit dem Kammerauslass versehenen ersten Aufnahmekammer aufweist,
wobei an mindestens einer der Kanalöffnungen an der lateralen Außenseite eine Dosierpumpe angeordnet ist und ein Zufuhr-Wasserkanal von dieser Kanalöffnung zu einer nach unten geschlossenen Aufnahmekammer führt, insbesondere mit einer Öffnung in diese Aufnahmekammer hinein führt,
wobei der Abfuhr-Wasserkanal in der Verteilabdeckung von einer Kanalöffnung zu dieser Dosierpumpe zu der Auslassöffnung in die erste Aufnahmekammer hinein führt.

2. Waschmittelverteiler nach Anspruch 1, **dadurch gekennzeichnet, dass** mindestens ein erster Wassereinlass von außen an der Verteilabdeckung vorgesehen ist, wobei vorzugsweise dieser Wassereinlass innerhalb der Verteilabdeckung mittels eines Wasserkanals mit der Auslassöffnung über der ersten Aufnahmekammer verbunden ist, wobei vorzugsweise dieser Wasserkanal entweder mit keinem anderen Wasserkanal innerhalb der Verteilabdeckung verbunden ist oder mit mindestens einem anderen Wasserkanal innerhalb der Verteilabdeckung verbunden ist, der zu der mindestens einen Dosierpumpe führt.

3. Waschmittelverteiler nach Anspruch 1 oder 2, **dadurch gekennzeichnet, dass** ein zweiter Wassereinlass an dem Waschmittelverteiler vorgesehen ist, der innerhalb der Verteilabdeckung zu einem Wasserkanal führt, der mit der mindestens einen Dosierpumpe verbunden ist oder der mit allen Dosierpumpen an der Verteilabdeckung verbunden ist, wobei insbesondere der zweite Wassereinlass mit einem Ventil verbunden ist, das Wasser von dem zweiten Wassereinlass weiterleitet in der Verteilabdeckung, wobei vorzugsweise das Ventil ein Zwei-Wege-Ventil ist, wobei ein Ventileinlass mit dem zweiten Wassereinlass verbunden ist und ein Ventilauslass mit dem Abfuhr-Wasserkanal verbunden ist.

4. Waschmittelverteiler nach einem der vorhergehenden Ansprüche, **dadurch gekennzeichnet, dass** der Abfuhr-Wasserkanal in mehrfach gebogener Form von der mindestens einen Dosierpumpe zu der Auslassöffnung führt, wobei vorzugsweise der Abfuhr-Wasserkanal in Mäanderform ausgebildet ist und mehrere parallele, direkt benachbarte Kanalabschnitte aufweist, die durch Biegungen von 180° miteinander verbunden sind, wobei insbesondere der Abfuhr-Wasserkanal im Bereich der mehrfach gebogenen Form einen größeren Kanalquerschnitt aufweist als entlang eines Abschnitts an der mindestens einen oder an mehreren Dosierpumpen vorbei, wobei vorzugsweise der Kanalquerschnitt im Bereich der mehrfach gebogenen Form zweimal bis zwanzigmal größer ist als im Abschnitt entlang der mindestens einen Dosierpumpe.

5. Waschmittelverteiler nach einem der vorhergehenden Ansprüche, **dadurch gekennzeichnet, dass** der Abfuhr-Wasserkanal hinter der Auslassöffnung weiter läuft, vorzugsweise mit gleichem Kanalquerschnitt, hin zu einer Verbindung mit einem Pumpeneinlass einer Umflutpumpe zum Pumpen von Wasser entlang des Abfuhr-Wasserkanals in einem Kreislauf, wobei ein Pumpenauslass der Umflutpumpe in einen Wasserkanal hin zu einem Pumpenauslass der mindestens einen Dosierpumpe geht, wobei der Wasserkanal hinter der Dosierpumpe bzw. ihres Pumpenauslasses als Abfuhr-Wasserkanal weiter läuft derart, dass der Pumpenauslass der Dosierpumpe in den Abfuhr-Wasserkanal mündet.

6. Waschmittelverteiler nach einem der vorhergehenden Ansprüche, **dadurch gekennzeichnet, dass** zwei bis fünf Dosierpumpen nebeneinander vorgesehen sind und an der Verteilabdeckung angeordnet sind, insbesondere an der lateralen Außenseite mit den Kanalöffnungen, wobei je ein Pumpeneinlass der Dosierpumpen mit einem Zufuhr-Wasserkanal an der Anschlussöffnung verbunden ist und ein Pumpenauslass der Dosierpumpen in den Abfuhr-Wasserkanal mündet.

7. Waschmittelverteiler nach Anspruch 6, **dadurch gekennzeichnet, dass** die Pumpenauslässe der Dosierpumpen entlang des Abfuhr-Wasserkanals hintereinander, insbesondere mit gleichem Abstand, in den Abfuhr-Wasserkanal münden, wobei vorzugsweise hier der Abfuhr-Wasserkanal einen kleineren Kanalquerschnitt aufweist.

8. Waschmittelverteiler nach Anspruch 6 oder 7, **dadurch gekennzeichnet, dass** die Dosierpumpen an der Verteilabdeckung mechanisch befestigt sind, wobei sie vorzugsweise an der lateralen Außenseite mechanisch befestigt sind.

9. Waschmittelverteiler nach einem der vorhergehenden Ansprüche, **dadurch gekennzeichnet, dass** die anderen Aufnahmekammern als die erste Aufnahmekammer nach oben offen sind, insbesondere über ihre ganze Grundfläche, zum Einbringen oder Einsetzen eines geschlossenen Behälters mit Waschmittel oder Zusatzstoff darin, wobei der Behälter Verbindungsmittel an den Zufuhr-Wasserkanal hin zur Dosierpumpe aufweist.

10. Waschmittelverteiler nach einem der vorhergehenden Ansprüche, **dadurch gekennzeichnet, dass** die Verteilabdeckung geschlossen ausgebildet ist bis auf Anschlüsse für Pumpen, Wasseranschlüsse von außen in die Verteilabdeckung hinein, eine Auslassöffnung in die erste Aufnahmekammer hinein und ggf. Öffnungen für Waschmittelbehälter oder Zusatzstoffbehälter in einer der anderen Aufnahmekammern, wobei vorzugsweise die Verteilabdeckungen zweiteilig ausgebildet ist mit einem Unterteil und einem Oberteil, wobei insbesondere das Oberteil als flache Platte ausgebildet ist und das Unterteil alle Wasserkanäle aufweist.

11. Waschmittelverteiler nach einem der vorhergehenden Ansprüche, **dadurch gekennzeichnet, dass** die Verteilabdeckung mittels 3D-Druck hergestellt ist, insbesondere als einziges zusammenhängendes Teil.

12. Waschmittelverteiler nach einem der vorhergehenden Ansprüche, **dadurch gekennzeichnet, dass** das Innenvolumen der Verteilabdeckung, insbesondere die gesamte Verteilabdeckung, ohne bewegbare Teile ausgebildet ist.

13. Waschmittelverteiler nach einem der vorhergehenden Ansprüche, **dadurch gekennzeichnet, dass** die Verteilabdeckung eine Heizeinrichtung aufweist, insbesondere zum Beheizen von innerhalb der Verteilabdeckung fließendem Wasser, wobei vorzugsweise die Heizeinrichtung eine Induktionsheizspule aufweist, insbesondere an einer Oberseite der Verteilabdeckung, und induktiv beheizbares Material innerhalb der Verteilabdeckung angeordnet ist, vorzugsweise nahe und/oder entlang mindestens eines der Wasserkanäle im Innenvolumen der Verteilabdeckung.

14. Waschmaschine mit einem Waschmittelverteiler nach einem der vorhergehenden Ansprüche, einem Gehäuse, einer Trommelaufnahmebehälter in dem Gehäuse, einer Trommel in dem Trommelaufnahmebehälter, einer Tür für die Trommel, einer Wasserführung und einer Waschmaschinensteuerung, wobei die Wasserführung Wasserleitungen und eine Pumpe aufweist, wobei vorzugsweise der Waschmittelverteiler in einem oberen Bereich der Waschmaschine angeordnet ist, insbesondere in einem oberen linken Bereich oder in einem oberen rechten Bereich.

15. Waschmaschine nach Anspruch 14, **dadurch gekennzeichnet, dass** unter dem Waschmittelverteiler, insbesondere unterhalb eines Kammerauslasses aus der ersten Aufnahmekammer der Aufnahme, eine Auffangvorrichtung nach Art eines Trichters vorgesehen ist, von der eine Wasserleitung in den Trommelaufnahmebehälter führt.
